# EUROPÄISCHE PATENTANMELDUNG

(11) **EP 1 970 140 A1**
(43) Veröffentlichungstag der Anmeldung: **17.09.2008**
(21) Anmeldenummer: 08003091.9
(22) Anmeldetag: 20.02.2008
(51) Int. Cl.: B21D 53/84, F01L 1/047

(54) **Verfahren zum Herstellen von gebauten Nockenwellen**

(30) Priorität: 16.03.2007 DE 102007012756
(71) Anmelder: Muhr und Bender KG, 57439 Attendorn (DE)
(72) Erfinder: Asbeck, Jochen, Dr.-Ing., 57439 Attendorn (DE); Hage, Bernd, Dipl.-Ing, 06484 Quedlinburg (DE); Wolf, Jochen, Dipl.-Ing., 06484 Quedlinburg (DE)
(74) Vertreter: Neumann, Ernst Dieter

(57) **Zusammenfassung**

Verfahren zum Herstellen von gebauten Nockenwellen aus einem Rohrkörper 21 und darauf aufgeschobenen Bauteilen 31, 35 mit jeweiligen Durchgangslöchern 33, 37 und äußeren Funktionsflächen 32, 36, wobei Bauteile 31, 35 mit nicht-spanend bearbeiteten Durchgangslöchern 33, 37 bereitgestellt werden, an denen eine Außenkontur 32 vorzugsweise fertigbearbeitet ist, wobei der Rohrkörper 21 auf eine Bezugsachse B bezogen zentriert eingespannt wird, wobei die Bauteile 31, 35 aufgeschoben und über ihre Außenkontur auf die Bezugsachse der Einspannung des Rohrkörpers 21 zentriert werden, wobei zwischen den Durchgangslöchern 33, 37 und dem Rohrkörper 21 ein Ausgleichs- und Fügespalt verbleibt, und wobei abschließend zwischen den Bauteilen 31, 35 und dem Rohrkörper 21 unter Materialzugabe eine Stoffschlußverbindung oder durch Aufweiten des Rohrkörpers eine Preßsitzverbindung hergestellt wird.

## Beschreibung

Die Erfindung betrifft ein Verfahren zum Herstellen von gebauten Nockenwellen aus einem Rohrkörper und darauf aufgeschobenen Bauteilen mit jeweils einem Durchgangsloch und einer äußeren Funktionsfläche, insbesondere Nockenscheiben und Lagerringen. Diese Bauteile können darüber hinaus auch Impulsgebernocken, Nokkenwellenversteller, Antriebsritzel und dergleichen umfassen. Gebaute Nockenwellen dieser Art haben den Vorteil, daß die Werkstoffe der Rohrwelle einerseits und der aufgeschobenen Nockenscheiben oder Lagerringe andererseits bezüglich ihrer Funktionsanforderungen optimiert werden können, d.h. es ist die Verwendung eines bruchfesten Rohrkörpers mit ausreichender Torsionselastizität mit Nocken oder Lagerringen aus geschmiedetem, gegossenem oder gesintertem Material zur Darstellung äußerst verschleißfester Funktionsflächen möglich. Daneben hat die gebaute Nockenwelle gegenüber Vollwellen erhebliche Gewichtsvorteile, wie es für moderne Leichtbaumotoren erforderlich ist.

Für die Herstellung der Verbindung zwischen Wellenrohr und Nockenscheiben sowie Lagerringen sowie weiterer Funktionselemente, insbesondere von am Ende der Rohrwelle angeordneten Antriebsritzeln oder Nockenwellenverstellernaben, gibt es unterschiedlichste Verbindungstechniken.

Hierbei ist es unter anderem bekannt, die Rohrwelle abschnittsweise durch Aufgabe von Innenhochdruck plastisch aufzuweiten, um einen entsprechenden Festsitz der Bauteile zu erzielen. Hierbei kann die freiliegende Rohrwelle durch die Verwendung von geeigneten Sonden in einzelnen Längsabschnitten innerhalb der Bauteile mit Innenhochdruck beaufschlagt und plastisch umgeformt werden oder es kann die Rohrwelle mit den Bauteilen in ein Gesenk eingelegt und über ihre ganze Länge mit Innenhochdruck beaufschlagt werden.

Es ist weiter bekannt, die Bauteile thermisch auf die Rohrwelle aufzuschrumpfen. Und schließlich ist es bekannt, bei Rohrwellen mit Sitzbereichen für die Bauteile mit vergrößerten Durchmesser die Bauteile im Preßsitz axial auf die Rohrwelle aufzuschieben.

Die vorstehend genannten Techniken verlangen nach Bauteilen mit spanend bearbeiteter Durchgangsöffnung, um geeignete Festsitze zu garantieren. Nach Herstellung der Festsitze wird die komplettierte Nockenwelle in bekannter Weise fertigbearbeitet.

Aus der DE 34 33 595 A1 ist ein Verfahren zur Herstellung einer gebauten Nockenwelle der eingangs genannten Art bekannt, bei der zwischen den Nockenscheiben oder Lagerringen und der Hohlwelle bzw. dem Tragrohr ein Laserschweißen bzw. Laserlöten erfolgt. Die Öffnungen der Nockenscheiben oder Lagerringe sollen dem Tragrohraußenquerschnitt entsprechen, so daß sich eine Schiebepassung ergibt. Zur gegenseitigen Halterung oder Fixierung sollen die Bauteile in eine nicht näher beschriebene Vorrichtung eingelegt werden. Dies ist nur möglich bei einem Innendurchschweißen oder Innendurchlöten aus der Hohlwelle bzw. dem Tragrohr heraus.

Aus der EP 0 295 281 B1 ist ein Verfahren zum Herstellen von gebauten Nockenwellen bekannt, bei dem einzelne Nockenscheiben in justierbaren Halterungen mit ihren Nockenbohrungen auf eine Längsachse zentriert werden, die zugleich die Längsachse der Halterung für den Rohrkörper bildet, die in die Nockenscheiben eingeschoben wird. Innerhalb der Nockenscheiben wird dann der Rohrkörper durch Innenhochdruckumformen abschnittsweise aufgeweitet, um jeweils zwischen den Nockenscheiben und dem Rohrkörper Preßsitzverbindungen zu bilden.

Aus der EP 0 313 565 B1 ist ein ähnliches Verfahren zur Herstellung einer Nockenwelle bekannt, bei dem zunächst runde Nockenringe von gleichmäßiger Wandstärke in einem Gesenk zur Nockenform umgeformt werden, während gleichzeitig eine eingeschobene Rohrwelle durch ein Innenhochdruckumformverfahren in die derart gebildeten Nockenringe eingeformt wird. Das notwendige Umformen der zunächst runden Nockenringe läßt die Verwendung von Materialien mit hoher Verschleißfestigkeit der Funktionsfläche nicht zu.

Aus der DE 101 500 093 C1 ist ein Verfahren zum Herstellen von gebauten Nockenwellen bekannt, bei welchem Nockenringe gleichmäßiger Wandstärke, jedoch mit fertiger Form der Funktionsfläche auf eine Rohrwelle aufgeschoben werden, wobei die Bauteile anschließend in ein Gesenk eingelegt werden, wo die Rohrwelle durch Innenhochdruckumformen kraft- und formschlüssig in die Nockenringe eingeformt wird.

Der vorliegenden Erfindung liegt die Aufgabe zugrunde, ein Verfahren zur Herstellung von gebauten Nockenwellen bereitzustellen, mit dem sich die Zahl der Bearbeitungsschritte reduzieren läßt. Eine Lösung hierfür besteht in einem Verfahren zum Herstellen von gebauten Nockenwellen aus einem Rohrkörper und darauf aufgeschobenen Bauteilen mit jeweiligen Durchgangslöchern und äußeren Funktionsflächen, insbesondere Nockenscheiben und Lagerringen, wobei der Rohrkörper auf eine Bezugsachse B bezogen zentriert eingespannt wird, wobei die Bauteile jeweils mit ihrem Durchgangsloch auf den Rohrkörper aufgeschoben und über ihre Außenkontur auf die Bezugsachse B des Rohrkörpers zentriert werden, wobei zwischen den Durchgangslöchern und dem Rohrkörper ein Fügespalt vorgesehen wird, und wobei zwischen den Bauteilen und dem Rohrkörper danach eine Stoffschlußverbindung hergestellt wird. Die Stoffschlußverbindung wird vorzugsweise unter Materialzugabe hergestellt und kann sich jeweils auf ringförmige Bereiche im Fügespalt an den axialen Stirnseiten der Bauteile beschränken. Durch die hiermit angegebenen erfindungsgemäßen Verfahrensschritte sind nach dem Herstellen der Stoffschlußverbindung, die insbesondere ein Laserschweißen, Laserlöten oder Kleben einschließt, die weitgehend fertigbearbeiteten Außenkonturen der Bauteile auf die Bezugsachse des Rohrkörpers lagegerecht bezogen, so daß ein eventuelles nachfolgendes Fertigbearbeiten, insbesondere ein Schleifen, nicht mehr zum Ausgleich von Lagefehlern der Bauteile im Verhältnis zur Bezugsachse, sondern nur noch der Oberflächenverbesserung dient. Es soll darauf geachtet werden, daß beim Laserlöten oder Laserschweißen die Anlaßtemperatur der Bauteile in der Lauffläche bzw.

Funktionsfläche nicht überschritten wird.

Eine zweite Lösung besteht in einem Verfahren zum Herstellen von gebauten Nokkenwellen aus einem Rohrkörper und darauf aufgeschobenen Bauteilen mit jeweiligen Durchgangslöchern und äußeren Funktionsflächen, insbesondere Nockenscheiben und Lagerringen, wobei der Rohrkörper auf eine Bezugsachse B zentriert eingespannt wird, wobei die Bauteile jeweils mit ihrem Durchgangsloch auf den Rohrkörper aufgeschoben und über ihre Außenkontur auf die Bezugsachse B des Rohrkörpers zentriert werden, wobei zwischen den Durchgangslöchern und dem Rohrkörper ein Fügespalt vorgesehen wird und wobei zwischen den Bauteilen und dem Rohrkörper danach durch plastisches Aufweiten des Rohrkörpers eine Preßsitzverbindung hergestellt wird. Hierbei kann der Rohrkörper vorzugsweise ausschließlich in den Bauteilen zugeordneten Längsabschnitten aufgeweitet werden, gleichzeitig mit der Preßsitzverbindung kann eine Formschlußverbindung, insbesondere aufgrund besonderer Oberflächenrauhigkeit der Durchgangslöcher hergestellt werden. Auch hierbei wird die weitgehend fertigbearbeitete Außenkontur der Bauteile, unabhängig von der Form und Lage der Durchgangslöcher, funktionsgerecht auf die Bezugsachse des Rohrkörpers bezogen, so daß die endgültige Position der einzelnen Bauteile mit ihren Funktionsflächen zueinander nach dem Umformschritt bereits höchste Qualität hat.

Mit den erfindungsgemäßen Verfahren werden Fertigungstoleranzen in den Durchgangslöchern und am Rohrkörper aus der Toleranzkette herausgenommen und im Fügespalt, der von ungleichförmiger Dicke über dem Umfang sein darf, ausgeglichen. Die Fertigung kann hierdurch entfeinert werden. Insbesondere ist in vorteilhafter Weiterbildung vorgesehen, daß die Bauteile mit nicht-spanend bearbeiteten Durchgangslöchern bereitgestellt und verwendet werden. Hiermit entfällt ein an sich typischer Bearbeitungsschritt. Auf der anderen Seite ist es möglich, für den Fügevorgang Bauteile mit bereits fertigbearbeiteter Außenkontur, im Falle von Nockenscheiben und Lagerringen also mit fertigbearbeiteter Lauffläche bereitgestellt werden. Hiermit entfällt ein weiteres Aufspannen der gebauten Nockenwelle nach dem Fügen.

Die erfindungsgemäßen Verfahren sind besonderes geeignet für Schmiedenocken, in denen das Durchgangsloch ausgelocht ist, wobei nach diesem Ausstoßen oder Auslochen keine Nachbearbeitungsschritte erfolgen müssen. Selbst auf ein Räumen des Durchganglochs kann bei dem erfindungsgemäße Verfahren verzichtet werden.

Das Verfahren ist in gleicher Weise mit Gußnocken und Sinternocken mit geformtem Durchgangsloch durchzuführen, die nach dem Formvorgang ebenfalls keinerlei mechanischer Nachbearbeitung des Durchgangslochs bedürfen.

Nach einer ersten Verfahrensführung ist vorgesehen, daß ein Rohrkörper mit zumindest im Bereich der Bauteile nicht-spanend bearbeiteter Oberfläche verwendet wird, der insbesondere über seine Innenfläche auf seine Innenachse A_{Zentren} zentriert eingespannt wird, wobei diese die Bezugsachse B für das Ausrichten der Bauteile bildet. Bei dieser Verfahrensführung kann nach dem Fügen der Nockenwelle noch ein Schleifen von Lagerstellen an der Rohrwelle erfolgen.

Nach einer zweiten Verfahrensführung ist vorgesehen, daß ein Rohrkörper mit zumindest im Bereich von Lagerstellen spanend bearbeiteter, insbesondere geschliffener Oberfläche verwendet wird, der über die Lagerstellen auf seine Lagerachse A_{Lager} zentriert eingespannt wird, wobei diese die Bezugsachse B für das Ausrichten der Bauteile bildet. Hier ist nach dem Fügen der Nockenwelle gegebenenfalls überhaupt kein weiterer Bearbeitungsschritt an der Rohrwelle erforderlich.

Bei der erstgenannten Variante erfolgt ein Innenspannen der Rohrwelle über die Endöffnungen, während bei der zweitgenannten Variante ein Außenspannen der bereits geschliffenen Lagerstellen erfolgt. Letzteres ist für das abschließende Aufweiten des Rohrkörpers mittels Innenhochdruckumformung günstig.

Um einen für das erfindungsgemäße Ausrichten der Bauteile auf die Rohrwelle geeigneten Fügespalt vorzuhalten, wird zwischen der Durchgangsöffnung der Nockenscheibe und dem Außendurchmesser des Rohrkörpers eine Differenz von mindestens 0,2 mm gewählt. Dieser Fügespalt wird dann mittels Laserlöten oder Laserschweißen mit Schweißgutzugabe bzw. Lötzugabe überbrückt. Gleiches gilt sinngemäß für das Kleben. Beim Fügen mittels Aufweiten des Rohrkörpers ist der Fügespalt erforderlich, um ein plastisches bleibendes Aufweiten des Rohrkörpers zuzulassen. Hierbei schließt sich der Fügespalt durch die Rohrumformung. Bei der gewählten Technik muß die Mitte der Durchgangsöffnung der Bauteile nicht notwendig zentrisch zur Außenoberfläche des Rohrkörpers liegen, die die allgemeine Längsachse A des Rohrkörpers bildet.

Das erfindungsgemäße Verfahren wird anhand der Zeichnungen in verschiedenen Phasen dargestellt und nachstehend erläutert.
- Figur 1: zeigt einen Abschnitt eines unbearbeiteten Rohrkörpers mit einer Nockenscheibe und einem Lagerring
a) vor dem Herstellen von Stoffschlußverbindungen;
b) nach dem Herstellen von Stoffschlußverbindungen.
- Figur 2: zeigt einen Abschnitt eines Rohrkörpers mit fertigbearbeiteten Lagerstellen mit einer aufgeschobenen Nockenscheibe
a) vor dem Herstellen einer Stoffschlußverbindung;
b) nach dem Herstellen einer Stoffschlußverbindung.
- Figur 3: zeigt einen Abschnitt eines Rohrkörpers mit fertigbearbeiteten Lagerstellen mit einer aufgeschobenen Nockenscheibe
a) vor dem Herstellen einer Preßsitzverbindung;
b) nach dem Herstellen einer Preßsitzverbindung.

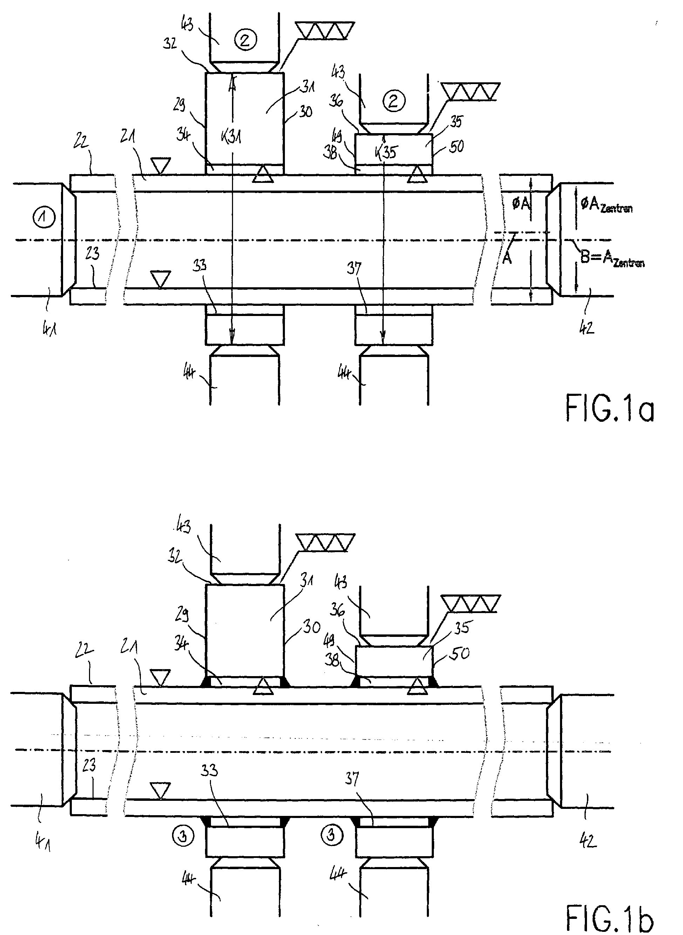

In Figur 1 a ist ein Abschnitt eines Rohrkörpers 21 gezeigt, der aus geschweißtem oder nahtlos gezogenem Rohr mit fertigungsgemäßer Oberfläche 22 und fertigungsgemäßer Innenfläche 23 besteht. Die Oberfläche definiert die allgemeine Längsachse A des Rohrkörpers 21. In einem ersten Verfahrensschritt, gekennzeichnet durch die Ziffer 1, wird der Rohrkörper 21 über seine Innenfläche 23 auf eine Bezugsachse B fixiert, wobei hierfür zwei Spitzen 41, 42 vorgesehen sind. Die Bezugsachse B der Aufspannung des Rohrkörpers wird hierbei durch die jeweiligen Mittelachse der Spitzen 41, 42 definiert. Der fertigungsgemäße Zustand der Oberflächen 22, 23 ist jeweils durch ein entsprechendes einfaches Oberflächenzeichen bezeichnet. Die Bezugsachse B der Aufspannung des Rohrkörpers 21 entspricht der Aufspannungsachse A zentren und kann bei Wanddickenfehlern von der allgemeinen Längsachse A abweichen.

In einem zweiten Verfahrensschritt, der durch die Ziffer 2 markiert ist, wird eine Nokkenscheibe 31 mit fertigbearbeiteter Lauffläche 32 und ein Lagerring 35 mit fertigbearbeiteter Lauffläche 36, die bereits zuvor auf den Rohrkörper 21 aufgeschoben waren, durch geeignete Backen 43, 44 mit ihren Außenkonturen K31, K35 auf die Bezugsachse B der Aufspannung des Rohrkörpers 21 ausgerichtet. Die unbearbeiteten Durchgangslöcher 33, 37 der Nockenscheibe 31 und des Lagerrings 35 spielten für diesen Ausrichtvorgang keine Rolle, so daß Ausgleichs- und Fügespalte 34, 38 entstehen können, die über dem Umfang ungleichförmige Dicke haben. Die fertigbearbeitete Laufflächen 32, 36 und die nicht-spanend bearbeiteten, insbesondere ausgelochten Durchgangslöcher 33, 35 sind mit entsprechenden Oberflächenzeichen bezeichnet.

In Figur 1b sind gleiche Einzelheiten wie in Figur 1 a mit gleichen Bezugsziffern bezeichnet. Auf die vorhergehende Beschreibung wird insoweit Bezug genommen. In einem dritten Verfahrensschritt, der mit der Ziffer 3 bezeichnet ist, sind die Fügespalte 34, 38 jeweils in Nähe der Stirnflächen 29, 30; 49, 50 der Bauteile 31, 35 mit ringförmigen Lotfüllungen 25, 26, 27, 28 aufgefüllt worden, die bereits erstarrt sind, wobei die Lotfüllungen nur geringfügig über die Stirnflächen der Nockenscheibe 31 bzw. des Lagerrings 35 überstehen sollen.

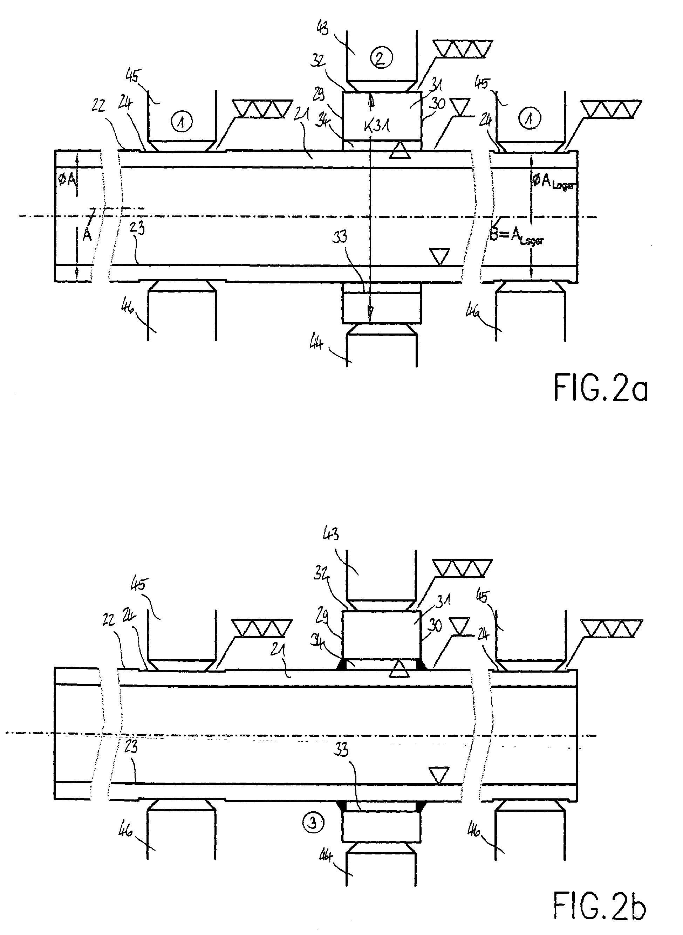

In Figur 2a ist ein Abschnitt eines Rohrkörpers 21 aus geschweißtem oder gezogenem Rohr gezeigt, der eine nicht nachbearbeitete, fertigungsbedingte Innenfläche 23 und eine zumindest an einzelnen Lagerstellen 24 spanend nachbearbeitete Oberfläche 22 aufweist. Die Lagerstellen 24 sind insbesondere geschliffen. Die Oberflächenqualität ist durch entsprechende Oberflächenzeichen markiert. Die Achse A Lager der Lagerstellen 24 kann gegebenenfalls von der durch die fertigungsbedingte Oberfläche 22 definierte allgemeine Längsachse A der Rohrwelle abweichen. In einem ersten Verfahrensschritt, der durch die Ziffer 1 bezeichnet ist wird der Rohrkörper 21 von geeigneten Backen 45, 46 im Bereich der Lagerstellen 24 eingespannt und auf die Bezugsachse B zentriert, die somit der Lagerachse A Lager entspricht wobei in einem zweiten Verfahrensschritt, der mit der Ziffer 2 bezeichnet ist, die Nockenscheibe 31, die zuvor bereits aufgeschoben war, über ihre Außenkontur K31 mittels Backen 43, 44 auf die Bezugsachse B der Aufspannung des Rohrkörpers 21 zentriert wird. Das unbearbeitete Durchgangsloch 33 der Nockenscheibe 31 spielt für diesen Zentriervorgang keine Rolle, so daß ein über dem Umfang ungleichmäßig dicker Ausgleichs- und Fügespalt 34 entstehen kann. Durch Oberflächenzeichen ist an der Nockenscheibe 31 die mechanisch fertigbearbeitete, insbesondere geschliffene Lauffläche 32 und die ausgebrochene bzw. ausgelochte Durchgangsöffnung 33 bezeichnet.

In Figur 2b sind gleiche Einzelheiten wie in Figur 2a mit gleichen Bezugsziffern bezeichnet. Auf die genannte Beschreibung wird Bezug genommen. Auch hier ist der Fügespalt 34 in einem dritten Verfahrensschritt, der mit der Ziffer 3 bezeichnet ist, an beiden Stirnflächen 29, 30 mit ringförmigen Lotfüllungen 25, 26 aufgefüllt, die bereits erstarrt sind, wobei die Lotfüllungen nur geringfügig über die Stirnflächen der Nokkenscheibe 31 überstehen soll.

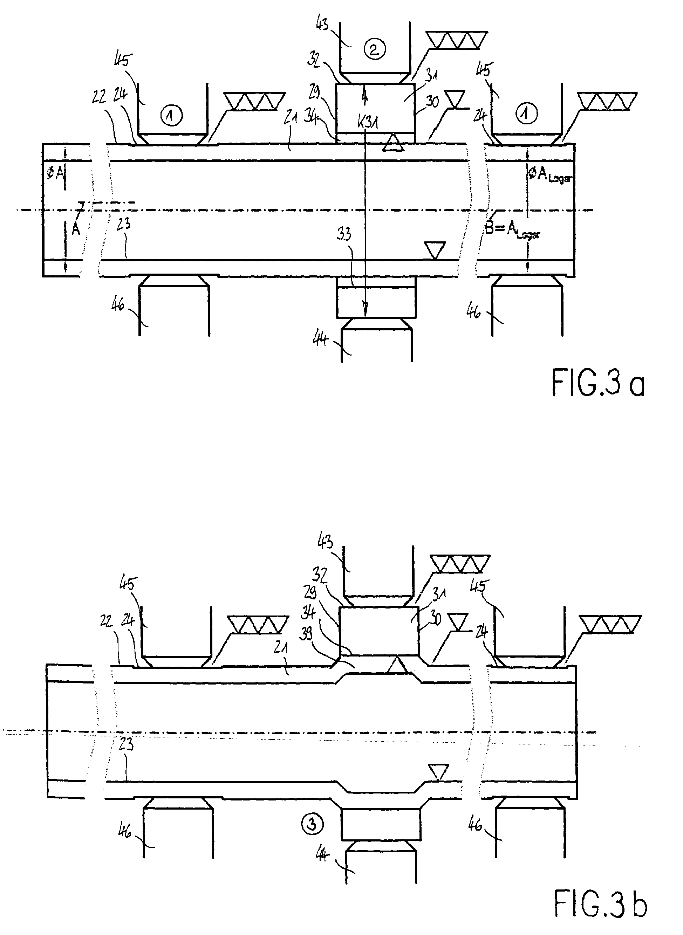

In Figur 3a ist ein Abschnitt eines Rohrkörpers 21 aus geschweißtem oder gezogenem Rohr gezeigt, der eine nicht nachbearbeitete, fertigungsbedingte Innenfläche 23 und eine zumindest an einzelnen Lagerstellen 24 spanend nachbearbeitete Oberfläche 22 aufweist. Die Lagerstellen 24 sind insbesondere geschliffen. Die Oberflächenqualität ist durch entsprechende Oberflächenzeichen markiert. Die Achse A Lager der Lagerstellen 24 kann gegebenenfalls von der durch die fertigungsbedingte Oberfläche 22 definierte allgemeine Längsachse A der Rohrwelle abweichen. In einem ersten Verfahrensschritt, der durch die Ziffer 1 bezeichnet ist, wird der Rohrkörper 21 von geeigneten Backen 45, 46 im Bereich der Lagerstellen 24 eingespannt und auf die Bezugsachse B zentriert, die somit der Lagerachse A Lager entspricht, wobei in einem zweiten Verfahrensschritt, der mit der Ziffer 2 bezeichnet ist, die Nockenscheibe 31, die zuvor bereits aufgeschoben war, über ihre Außenkontur K31 mittels Backen 43, 44 auf die Bezugsachse B der Aufspannung des Rohrkörpers 21 zentriert wird. Das unbearbeitete Durchgangsloch 33 der Nockenscheibe 31 spielt für diesen Zentriervorgang keine Rolle, so daß ein über dem Umfang ungleichmäßig dicker Ausgleichs- und Fügespalt 34 entstehen kann. Durch Oberflächenzeichen ist an der Nockenscheibe 31 die mechanisch fertigbearbeitete, insbesondere geschliffene Lauffläche 32 und die ausgebrochene bzw. ausgelochte Durchgangsöffnung 33 bezeichnet.

In Figur 3b sind gleiche Einzelheiten wie in Figur 3a mit gleichen Bezugsziffern bezeichnet. Auf die genannte Beschreibung wird Bezug genommen. Hier ist der Fügespalt in einem dritten Verfahrensschritt, der mit der Ziffer 3 bezeichnet ist, durch plastisches radiales Aufweiten des Rohrkörpers 21 im Bereich einer Aufweitstelle 39 innerhalb der Nockenscheibe 31 bleibend zu Null geworden. Zwischen der Aufweitstelle 39 und dem Durchgangsloch 33 besteht hiernach eine Preßsitzverbindung.

### Bezugszeichenliste

- 21: Rohrkörper
- 22: Oberfläche
- 23: Innenfläche
- 24: Lagerstelle
- 25: Lotfüllung
- 26: Lotfüllung
- 27: Lotfüllung
- 28: Lotfüllung
- 29: Stirnfläche
- 30: Stirnfläche
- 31: Nockenscheibe
- 32: Lauffläche
- 33: Durchgangsloch
- 34: Fügespalt
- 35: Lagerring
- 36: Lauffläche
- 37: Durchgangsloch
- 38: Fügespalt
- 39: Aufweitstelle
- 41: Spitze
- 42: Spitze
- 43: Backe
- 44: Backe
- 45: Backe
- 46: Backe
- 47:
- 48:
- 49: Stirnfläche
- 50: Stirnfläche

## Patentansprüche

1. Verfahren zum Herstellen von gebauten Nockenwellen aus einem Rohrkörper (21) und darauf aufgeschobenen Bauteilen mit jeweils einem Durchgangsloch (33, 37) und einer äußeren Funktionsfläche (32, 36), insbesondere Nockenscheiben (31) und Lagerringen (35),
**dadurch gekennzeichnet,**
**daß** der Rohrkörper (21) auf eine Bezugsachse (B) zentriert eingespannt wird, daß die Bauteile (31, 35) jeweils mit ihrem Durchgangsloch (33, 37) auf den Rohrkörper (21) aufgeschoben und über ihre Außenkontur (K31, K35) auf die Bezugsachse (B) des Rohrkörpers (21) zentriert werden, wobei zwischen den Durchgangslöchern (33, 37) und dem Rohrkörper (21) ein Fügespalt (34, 38) vorgesehen wird, und
**daß** zwischen den Bauteilen (31, 35) und dem Rohrkörper (21) danach eine Stoffschlußverbindung hergestellt wird.

2. Verfahren nach Anspruch 1,
**dadurch gekennzeichnet,**
**daß** die Stoffschlußverbindung zwischen den Bauteilen (31, 35) und dem Rohrkörper (21) unter Materialzugabe erfolgt.

3. Verfahren nach einem der Ansprüche 1 oder 2,
**dadurch gekennzeichnet,**
**daß** die Stoffschlußverbindung jeweils ringförmig an den axialen Stirnflächen (29, 30; 49, 50) der Bauteile (31, 35) hergestellt wird.

4. Verfahren zum Herstellen von gebauten Nockenwellen aus einem Rohrkörper (21) und darauf aufgeschobenen Bauteilen mit jeweils einem Durchgangsloch (33, 37) und einer äußeren Funktionsfläche (32, 36), insbesondere Nockenscheiben (31) und Lagerringen (35),
**dadurch gekennzeichnet,**
**daß** der Rohrkörper (21) auf eine Bezugsachse (B) zentriert eingespannt wird, daß die Bauteile (31, 35) jeweils mit ihrem Durchgangsloch (33, 37) auf den Rohrkörper (21) aufgeschoben und über ihre Außenkontur (K31, K35) auf die Bezugsachse (B) des Rohrkörpers (21) zentriert werden, wobei zwischen den Durchgangslöchern (33, 37) und dem Rohrkörper (21) ein Fügespalt (34, 38) vorgesehen wird, und
**daß** danach durch plastisches Aufweiten des Rohrkörpers (21) zwischen den Bauteilen (31, 35) und dem Rohrkörper (21) eine Preßsitzverbindung hergestellt wird.

5. Verfahren nach Anspruch 4,
**dadurch gekennzeichnet,**
**daß** der Rohrkörper (21) ausschließlich in den Bauteilen (31, 35) zugeordneten Längsabschnitten aufgeweitet wird.

6. Verfahren nach einem der Ansprüche 4 oder 5,
**dadurch gekennzeichnet,**
**daß** im Bereich der Preßsitzverbindungen gleichzeitig ein Formeingriff zwischen Bauteilen (31, 35) und Rohrkörper (21) hergestellt wird.

7. Verfahren nach einem der Ansprüche 1 bis 6,
**dadurch gekennzeichnet,**
**daß** die Bauteile (31, 35) mit nicht-spanend bearbeiteten Durchgangslöchern (33, 37) bereitgestellt werden.

8. Verfahren nach einem der Ansprüche 1 bis 7,
**dadurch gekennzeichnet,**
**daß** Bauteile (31, 35) bereitgestellt werden, deren Funktionsfläche (32, 36) fertigbearbeitet ist.

9. Verfahren nach einem der Ansprüche 1 bis 8,
**dadurch gekennzeichnet,**
**daß** ein Rohrkörper (21) mit zumindest im Bereich der Bauteile (31, 35) nicht-spanend bearbeiteter Oberfläche verwendet wird, der insbesondere über seine Innenfläche (23) auf seine Innenachse (A Zentren) zentriert eingespannt wird und daß diese Innenachse (A Zentren) die Bezugsachse (B) bildet.

10. Verfahren nach einem der Ansprüche 1 bis 8,
**dadurch gekennzeichnet,**
**daß** ein Rohrkörper (21) mit zumindest im Bereich von Lagerstellen (24) spanend bearbeiteter, insbesondere geschliffener Oberfläche verwendet wird, der über die Lagerstellen (24) auf seine Lagerachse (A Lager) zentriert eingespannt wird und daß diese Lagerachse (A Lager) die Bezugsachse (B) bildet.

11. Verfahren nach einem der Ansprüche 1 bis 10,
**dadurch gekennzeichnet,**
**daß** Bauteile (31, 35) mit ausgelochten Durchgangslöchern (33, 37) verwendet werden.

12. Verfahren nach einem der Ansprüche 1 bis 10,
**dadurch gekennzeichnet,**
**daß** geformte Bauteile (31, 35) aus Sinterwerkstoff oder Gußwerkstoff mit geformten Durchgangslöchern (33, 37) verwendet werden.

13. Verfahren nach einem der Ansprüche 1 bis 12,
**dadurch gekennzeichnet,**
**daß** ein Fügespalt (34, 38) vorgesehen wird, der auf einer Durchmesserdifferenz von mindestens 0,2 mm zwischen Durchgangslochdurchmesser der Bauteile (31, 35) und Außendurchmesser des Rohrkörpers (21) im Fügebereich basiert.

14. Verfahren nach einem der Ansprüche 1 bis 3 und 7 bis 13,
**dadurch gekennzeichnet,**
**daß** die Stoffschlußverbindung mittels Laserlöten, Laserschweißen oder Kleben hergestellt wird.

15. Verfahren nach Anspruch 14,
**dadurch gekennzeichnet,**
**daß** beim Laserlöten oder Laserschweißen in den Funktionsflächen (32, 36) der Bauteile (31, 35) die Anlaßtemperatur des jeweiligen Werkstoffs nicht überschritten wird.

16. Verfahren nach einem der Ansprüche 4 bis 15,
**dadurch gekennzeichnet,**
**daß** das plastische Aufweiten des Rohrkörpers (21) durch hydraulisches Innenhochdruckumformen erfolgt.

17. Verfahren nach einem der Ansprüche 1 bis 16,
**dadurch gekennzeichnet,**
**daß** nach dem Herstellen der Stoffschlußverbindung oder der Preßsitzverbindung eine Fertigbearbeitung von Funktionsflächen (32, 36) der Bauteile (31, 35) erfolgt.

18. Verfahren nach Anspruch 17,
**dadurch gekennzeichnet,**
**daß** die Fertigbearbeitung auf Schleifen und ggfs. Finishen beschränkt ist.
